# EUROPEAN PATENT APPLICATION

(11) **EP 2 551 518 A2**
(43) Date of publication of application: **30.01.2013**
(21) Application number: 12177856.7
(22) Date of filing: 25.07.2012
(51) Int. Cl.: F03D 11/00, H01F 27/02, H01F 27/08

(54) **Transformer for wind power generation and wind power generation system**

(30) Priority: 25.07.2011 JP 2011161541
(71) Applicant: Hitachi Industrial Equipment Systems Co., Ltd., Tokyo 101-0022 (JP)
(72) Inventor: Hayashi, Noriyuki, Tokyo 100-8220 (JP); Matsuo, Takahide, Tokyo 100-8220 (JP); Shirahata, Toshiki, Niigata 959-2608 (JP); Ono, Junji, Niigata 959-2608 (JP); Ohama, Hideharu, Niigata 959-2608 (JP)
(74) Representative: MERH-IP Matias Erny Reichl Hoffmann

(57) **Abstract**

A transformer (7) for wind power generation is configured such that the transformer's main body (8), which contains an insulating refrigerant in a tank (15) where an iron core and windings mounted to the iron core are contained, is disposed in a tower (3) which configures a wind power generation system (1), and that water surrounding the wind power generation system (1) is used as a secondary refrigerant for cooling the aforementioned refrigerant.

## Description

### [Technical Field]

The present invention relates to a transformer for wind power generation or a wind power generation system and, in particular, to the cooling thereof.

### [Background Art]

In sending generated electric power to electric power systems, wind power generation systems generally raise the voltage by means of transformers.

Herein, for example, patent literature (PTL) 1 describes a technology in this field. PTL 1 describes a wind power generation facility in which an entire transformer is contained in a tower, and the transformer and the wall surfaces of the tower are components of the cooling circuit which is configured as a closed circuit.

Furthermore, for example, a technology related to general transformers is described in PTL 2. The transformer described in PTL 2 is a transformer for buildings which is installed on a building floor, and the transformer's main body is contained in an electrical facility room that accommodates electrical equipment, and a natural air-cooling radiator connected to the transformer's main body is installed in an exterior location of the floor.

PTL 3 describes the situation in which a liquid refrigerant for cooling the transformer structure located in a tank is cooled by cooling water from a cooler located outside the tank, and the cooling water is recooled in the cooling tower.

### [Citation List]

### [Patent Literature]

[PTL 1] Japanese Patent No. 3715238 (corresponding WO 01/06121A1)
[PTL 2] Japanese Patent Laid-open No. Sho 63(1988)-213330
[PTL 3] Japanese Patent Laid-open No. Hei 2(1990)-206104

### [Summary of Invention]

### [Technical Problem]

According to PTL 1, air for cooling the insulating cooling medium itself, such as oil, which has taken heat from the transformer's main body circulates through the cooling circuit which is configured as a closed circuit that includes the wall surfaces of the tower. However, in this case, a cooling medium, such as oil, is cooled by air (that circulates throughout the tower's interior), and the ability to cool the cooling medium, such as oil, which has large thermal capacity and large thermal conductivity is limited.

Furthermore, according to PTL 2, a transformer's main body is encased in the building's electrical facility room, and the transformer's radiator is installed outside the building. Accordingly, most of the heat emitted from the transformer's main body is directly discharged to the outside air via a radiator, and therefore, temperature of the electrical facility room where the transformer's main body is located does not increase much. However, similar to PTL 1, because air is used to cool a cooling medium, such as oil, that has taken heat from the transformer's main body, the ability to cool the cooling medium, such as oil, which has large thermal capacity and large thermal conductivity is limited.

According to PTL 3, high cooling performance can be obtained because water, having superior cooling characteristics, is used to cool the cooling medium which has had its temperature raised as the result of taking heat from the transformer's main body. However, because a given amount of water stored in a water tank is circulated and reused, the pipe system through which cooling water circulates is provided with a cooling tower or the like to lower the water temperature that has been raised as the result of taking heat from the cooling medium. Consequently, the number of components of the cooling system of the transformer increases, making the system complicated and increasing its costs.

Consequently, an objective of the present invention is to provide a transformer capable of easily increasing cooling performance and provide a wind power generation system equipped with the transformer.

### [Solution to Problem]

To achieve the aforementioned object, a transformer for wind power generation according to the present invention is configured such that the transformer's main body, which contains an insulating refrigerant in a tank where an iron core and windings mounted to the iron core are contained, is disposed in a tower which configures a wind power generation system, and the transformer for wind power generation uses water surrounding the wind power generation system as a secondary refrigerant for cooling the aforementioned refrigerant.

### [Advantageous Effects of Invention]

According to the present invention, it is possible to provide a transformer for wind power generation capable of easily increasing cooling performance and provide a wind power generation system equipped with the transformer.

The above and further features and advantages of the invention will more fully appear from the following detailed description of preferred embodiments.

### [Brief Description of Drawings]

FIG. 1 is a vertical cross-sectional side view of the entire offshore wind power generation system in Example 1.
FIG. 2 is a vertical cross-sectional side view of the lower part of the offshore wind power generation system illustrated in FIG. 1.
FIG. 3 is a vertical cross-sectional side view of the lower part of the offshore wind power generation system in Example 2.
FIG. 4 is a vertical cross-sectional side view of the lower part of the offshore wind power generation system in Example 3.
FIG. 5 is a vertical cross-sectional side view of the lower part of the offshore wind power generation system in Example 4.
FIG. 6 is a vertical cross-sectional side view of the lower part of the offshore wind power generation system in Example 5.

### [Description of Embodiments]

Hereinafter, preferred embodiments of the present invention will be described with reference to the drawings. However, the following are only examples and are not intended to limit the interpretation of the present invention to specific embodiments.

### [Example 1]

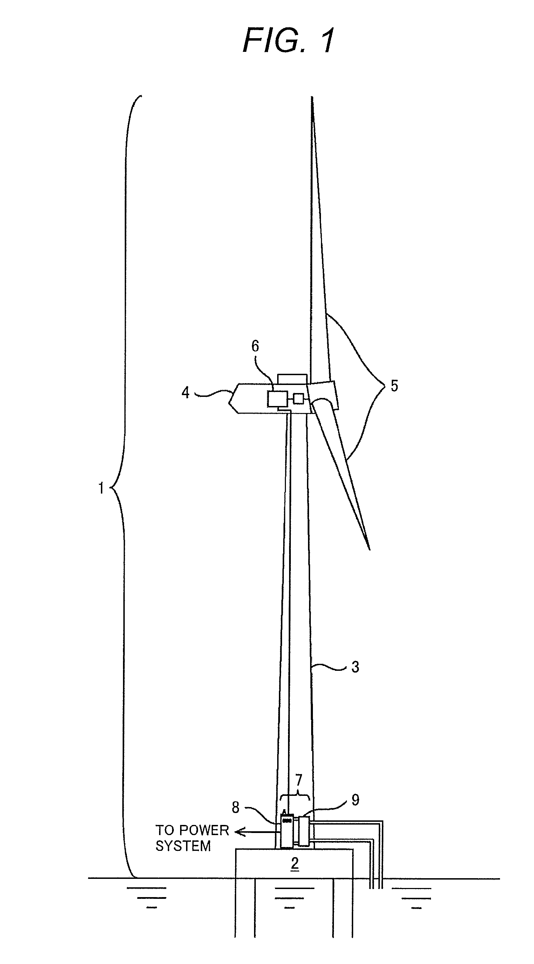

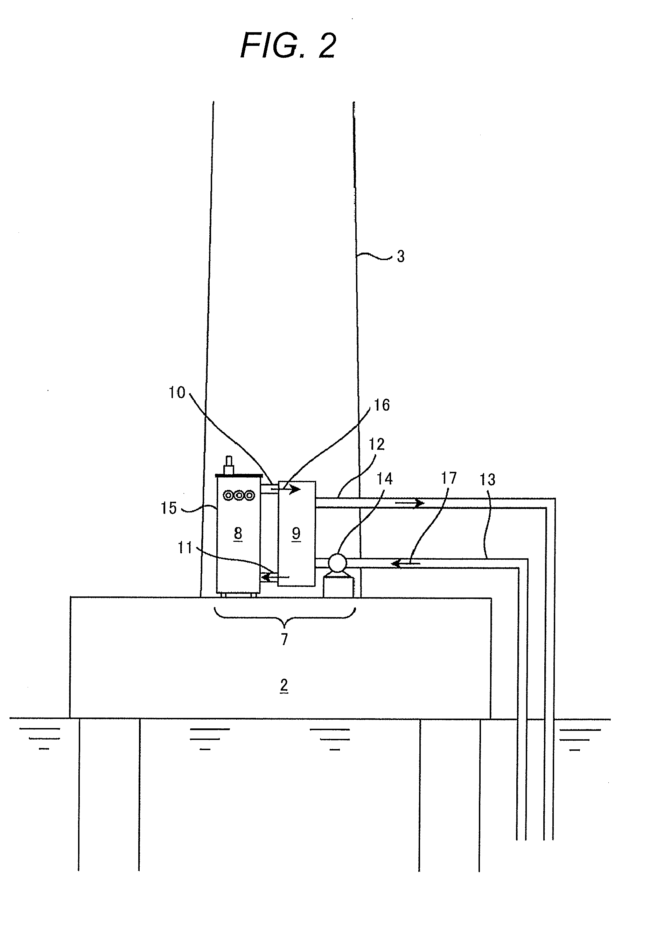

Hereinafter, Example 1 will be described with reference to FIG. 1 and FIG. 2.

A wind power generation system 1 in this example roughly comprises a tower (support column) 3 which is built on an offshore base 2, a nacelle 4 that is disposed on the top of the tower 3 and supported by the tower 3 as a support shaft so that it can rotate within a surface vertical to the shaft of the tower, a rotor blade 5 that is installed at the tip of the nacelle 4 and rotates by wind, and a power generator 6 connected to the rotor blade 5. Furthermore, a transformer 7 in this example is roughly composed of the transformer's main body (the main body of the transformer) 8 and a water-cooled heat exchanger 9, both of which are contained in the tower 3 of the wind power generation system 1.

Detailed description is as follows: the transformer 7 for wind power generation comprises the transformer's main body 8, a water-cooled heat exchanger 9, an upper pipe 10 and a lower pipe 11 that connect the transformer's main body 8 and the water-cooled heat exchanger 9 to enable a cooling medium 16 to move therebetween, an upper water pipe 12 that serves as a channel for discharging water from the water-cooled heat exchanger 9, a lower water pipe 13 that serves as a channel for supplying water to the water-cooled heat exchanger 9, and a water pump 14 that is provided with the lower water pipe 13 so as to supply water to the water-cooled heat exchanger 9, wherein the upper water pipe 12 and the lower water pipe 13 extend into the sea so as to use seawater as circulating water.

The aforementioned transformer's main body 8 is configured such that an insulating cooling medium 16, such as mineral oil, is contained in the transformer's tank (a tank for the transformer) 15, which is an airtight container for containing an iron core and exciting windings mounted to the iron core.

The interior of the water-cooled heat exchanger 9 is constructed such that the cooling medium 16 having high temperature (as the result of taking heat from the transformer's main body 8) and low-temperature seawater 17 for cooling the medium flow alongside to each other with a solid wall interposed to avoid the two liquids from mixing, wherein heat transfers from the high-temperature cooling medium 16 to the low-temperature seawater 17, which is a secondary refrigerant, thereby decreasing the temperature of the cooling medium 16 and increasing the temperature of the seawater 17. The water-cooled heat exchanger 9 uses a shell and tube heat exchanger in which a large number of tubes are supported in parallel and contained in a cylindrical shell, and different fluids flow inside and outside the tubes; alternatively, the water-cooled heat exchanger 9 uses a plate-type heat exchanger in which a channel is created by placing a large number of plates so that a high-temperature fluid and a low-temperature fluid alternately flow on both sides of the plates.

When using seawater 17 as cooling water for the water-cooled heat exchanger 9 as in this example, since seawater has very high salt content as well as a large number of impurities and diverse organisms, it is necessary to prevent material strength from decreasing due to corrosion as well as heat transfer performance from deteriorating due to contamination of the heat transfer surface. With regard to the corrosion of material, it is possible to increase corrosion resistance by using stainless steel material. Furthermore, contamination of the heat transfer surface mainly results from sea life attaching to and reproducing on the heat transfer surface. With regard to the contamination of the heat transfer surface, it is possible to prevent marine life from attaching to surfaces by mixing chlorine obtained by means of electrolysis of seawater or ozone produced by use of an oxygen generator or a discharge device into the seawater 17 that flows through the lower water pipe 13 to be supplied to the water-cooled heat exchanger 9. Another possibility is by periodically supplying low-temperature seawater that has been kept at approximately 8°C by a cooler or a heat exchanger through a water pipe other than the lower water pipe 13 to the upper water pipe 12 via the water-cooled heat exchanger 9 through the lower water pipe 13. If it is preferable to place importance on the prevention of marine life from attaching to surfaces, it is also possible to use copper or brass material but at a cost of the aforementioned corrosion resistance.

According to this example, the cooling medium 16 in the transformer's tank 15 raises its temperature as the result of taking heat generated in the iron core and the windings, thereby increasing its volume and decreasing its density. The high-temperature cooling medium 16 having low density and relatively light weight ascends and flows into the upper part of the water-cooled heat exchanger 9 through the upper pipe 10 disposed on the upper side. The cooling medium 16 that has flown into the heat exchanger 9 exchanges heat with the low-temperature seawater 17 that flows through the channel divided by the solid wall in the heat exchanger 9. The cooling medium 16 from which heat has been taken by the low-temperature seawater 17 lowers its temperature, and the reduced volume increases density and weight relatively; thus, the cooling medium 16 descends in the heat exchanger 9. Subsequently, the cooling medium 16 returns to the transformer's tank 15 through the lower pipe 11 provided on the lower side and contributes to the cooling of the transformer's tank 15. That is, natural convection occurs with the increase and decrease of temperature, which makes the cooling medium 16 circulate.

Seawater 17 serves as a secondary refrigerant in such a way that seawater is pumped from the sea by a water pump 14 and flows through the lower water pipe 13 to the water-cooled heat exchanger 9, where the seawater takes heat from the high-temperature cooling medium 16, becomes hot, and is then discharged to the sea through the upper water pipe 12.

Therefore, most of the heat generated in the transformer's main body 8 is transferred from the cooling medium 16 running through the water-cooled heat exchanger 9 to the seawater 17 and discharged to the sea. Accordingly, temperature of air inside the tower 3 of the offshore wind power generation system 1 that contains the transformer's main body 8 and the heat exchanger 9 does not increase much. Consequently, it is possible to significantly reduce the size of the ventilation and air-conditioning equipment of the tower 3 or eliminate it altogether.

Furthermore, when cooling the cooling medium 16, such as oil, which has taken heat from the transformer's main body 8, a heat exchanger 9 is used that cools the medium by use of seawater 17 having high cooling characteristics instead of using a radiator that cools the medium by air having low cooling characteristics. By use of a heat exchanger 9 that cools the medium by means of seawater 17 having high cooling characteristics, thermal capacity increases even if the volume is the same. Therefore, when compared with the situation where a radiator is used, it is possible to reduce the size of the water-cooled heat exchanger 9. When used in an offshore wind power generation system 1, the tower 3 is required to have a small installation area. Thus, a small-size transformer 7 is preferred when it is contained in the tower 3.

Moreover, since the volume of seawater is enormous, the temperature of seawater of the entire sea does not change even if seawater 17 that has had its temperature raised as the result of taking heat from the cooling medium 16 is discharged to the sea. Accordingly, low-temperature seawater 17 can always be supplied by a pump 14 to the water-cooled heat exchanger 9. Consequently, for example, it is not necessary to provide a cooling tower or the like to lower the water temperature, and cooling performance can be increased by means of a simple configuration.

### [Example 2]

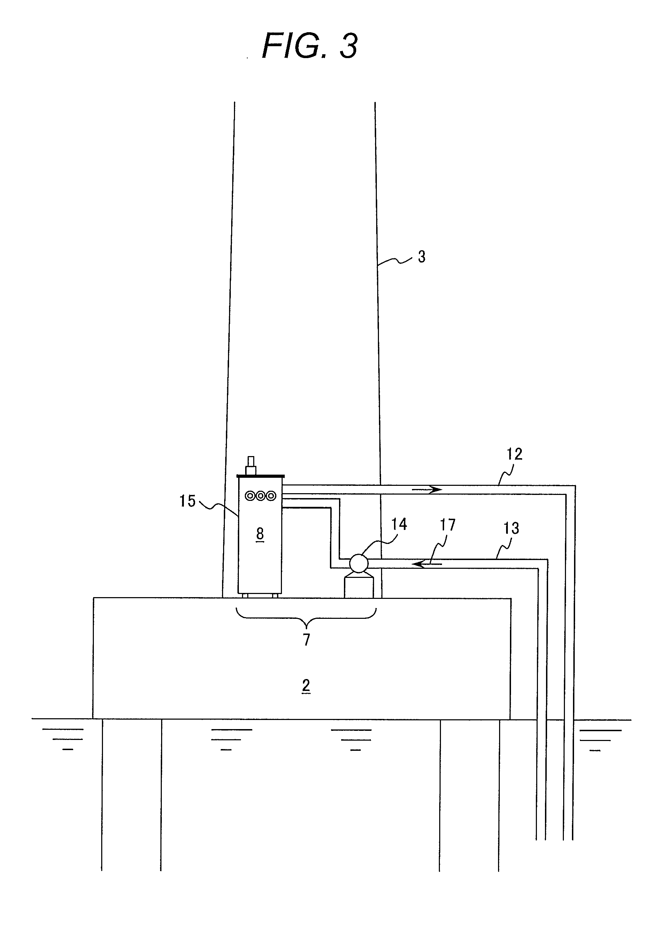

Next, a second example will be described with reference to FIG. 3. In Example 2, a cooling medium 16 that has had its temperature raised as the result of taking heat from the transformer's main body 8 is cooled by seawater 17 by means of a simpler configuration without using a water-cooled heat exchanger 9.

As illustrated in FIG. 3, instead of using an upper pipe 10, a lower pipe 11, and a water-cooled heat exchanger 9, a spiral corrugated tube (not illustrated) is vertically disposed along the inner wall of the upper part of the transformer's tank 15; and the both ends (inlet and outlet) of the corrugated tube are connected to the upper water pipe 12 and the lower water pipe 13. Then, a water pump 14 is installed in the middle of the lower water pipe 13. Other portions are the same as those of Example 1 and repeated explanations will be omitted.

According to this example, the cooling medium 16 in the transformer's tank 15 raises its temperature as the result of taking heat generated in the iron core and the windings, and with the increase in temperature, the volume increases and the density decreases relatively. The high-temperature cooling medium 16 having low density and light weight ascends toward the upper part of the transformer's tank 15 in which the corrugated tube is disposed. Since low-temperature seawater 17 provided through the lower water pipe 13 by a water pump 14 flows through the corrugated tube, the low-temperature seawater 17 and the high-temperature cooling medium 16 exchange heat via the corrugated tube. Thus, the high-temperature cooling medium 16 that has ascended to the upper part of the transformer's tank 15 is cooled, lowers its temperature, and decreases its volume relatively. Consequently, its density increases, which generates natural convection that moves downward along the inner wall of the transformer's tank 15. In such a way, a circulating flow of the cooling medium 16 is generated in the transformer's tank 15.

Seawater 17, which serves as a secondary refrigerant, is pumped from the sea by the water pump 14 and flows through the lower water pipe 13 to the corrugated tube located on the upper part of the transformer's tank 15, where the seawater takes heat from the high-temperature cooling medium 16 surrounding the corrugated tube, becoming hot, and is then discharged to the sea through the upper water pipe 12.

According to this example, when compared with Example 1, a water-cooled heat exchanger 9, an upper pipe 10, and a lower pipe 11 are eliminated, which can further reduce the size of the equipment and simplify the entire configuration. This configuration can reduce costs and prevent air temperature in the tower 3 of the wind power generation system 1 from increasing similar to Example 1. Accordingly, it is also possible to significantly reduce the size of the ventilation and air conditioning equipment of the tower 3 or eliminate it altogether. Furthermore, when used in an offshore wind power generation system 1, the tower 3 is required to have a small installation area. Thus, it is obvious that a smaller transformer 7 than that of Example 1 is more preferred when it is contained in the tower 3.

In this example, although the corrugated tube is installed in the upper part of the transformer's tank 15, it is obvious that the corrugated tube may be disposed vertically throughout the interior of the transformer's tank 15. However, when the corrugated tube is disposed in a centralized manner on the upper part of the transformer's tank 15 as described in detail in this example, heat can be intensively exchanged with the high-temperature cooling medium. Thus, the cooling effects per unit surface area of the corrugated tube are increased.

### [Example 3]

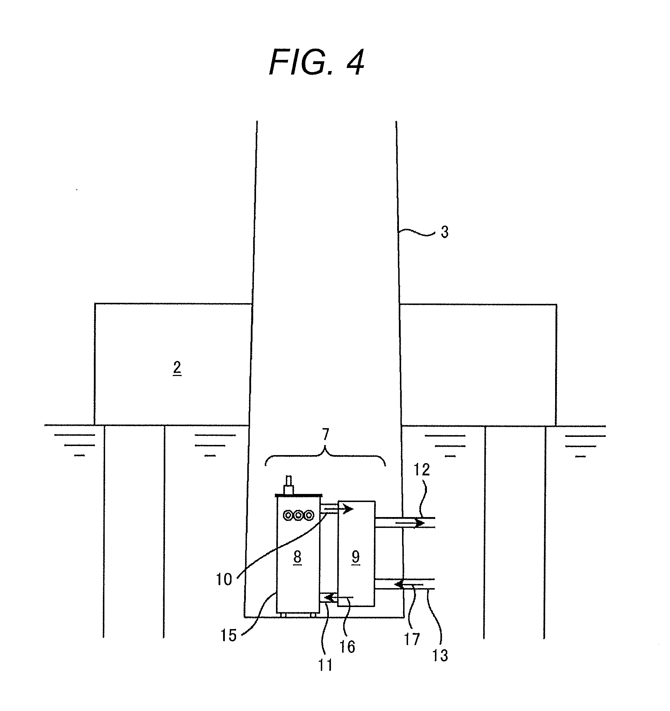

Example 3 will be described with reference to FIG. 4. However, with regard to a portion that is the same as the aforementioned portion, repeated explanations will be omitted.

In this example, configuration is different from Example 1 in two points: one point is that the tower 3 is extended downward below the base 2 so that the lower part of the tower 3 is located under water and the transformer 7 (i.e., the transformer's main body 8 and the heat exchanger 9) is installed in the submerged portion of the tower 3; and the other point is that no water pump is provided for supplying and discharging seawater 17 to and from the water-cooled heat exchanger 9.

According to this example, the cooling medium 16 behaves in the same manner as Example 1. On the other hand, the water-cooled heat exchanger 9, the upper water pipe 12, and the lower water pipe 13 are all located below the sea level. That is, seawater 17 flows through the lower water pipe 13 to the heat exchanger 9 without using a water pump. The flowing seawater 17 raises its temperature as the result of taking heat from the high-temperature cooling medium 16, which increases the volume and relatively decreases the density. The seawater 17 having low density and relatively light weight flows upward in the heat exchanger 9 and is discharged to the sea through the upper water pipe 12. That is, even without a water pump, the seawater 17 can flow in the heat exchanger 9 according to natural convection.

According to this example, when compared with Example 1, a water pump is unnecessary. Since a water pump is not provided, the size of the equipment can be reduced and the configuration itself can be simplified, reducing the costs. Furthermore, since the lower part of the tower 3 of the offshore wind power generation system 1 is located under water, the wall surfaces of the tower are cooled by seawater having better cooling characteristics than those of the air. Thus, temperature of air in the tower 3 decreases more significantly than in the case of Example 1. Accordingly, it is possible to significantly reduce the size of the ventilation and air conditioning equipment of the tower 3 or eliminate it altogether, and synergistic effects can be expected.

Furthermore, it is also possible to avoid the situation in which a water pump fails causing the water-cooled heat exchanger 9 to stop operating. Thus, reliability of the entire equipment can be increased.

Furthermore, it is also possible to apply the configuration of Example 3 to Example 2 in which a spiral corrugated tube is disposed along the inner wall of the upper part of the transformer's tank 15, and both ends of the corrugated tube are connected to the upper water pipe 12 and the lower water pipe 13. That is, by extending the tower 3 downward below the base 2 so that the lower part of the tower 3 is located under water and the transformer 7 is installed in the submerged portion of the tower, it is obvious that the same effects as those of example 3, as described above, can be obtained in addition to the effects of Example 2 described above.

### [Example 4]

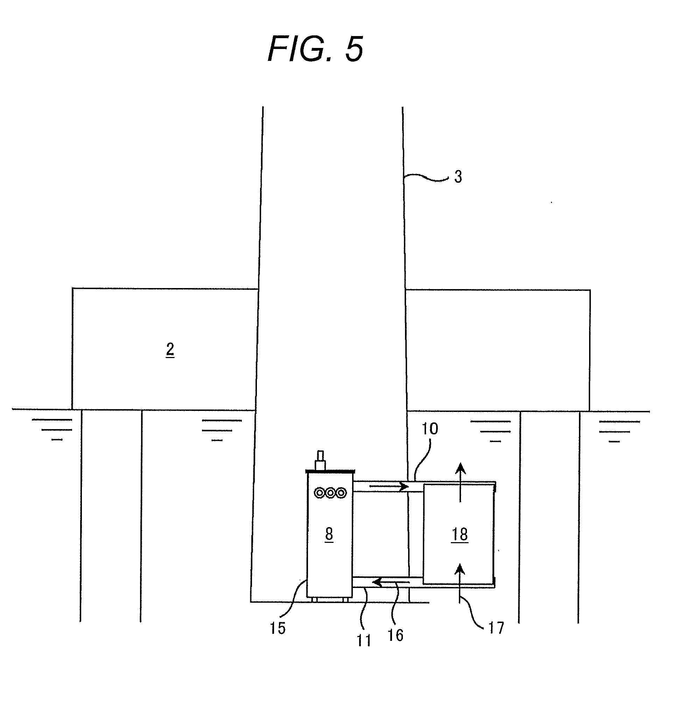

Example 4 will be described with reference to FIG. 5. However, with regard to a portion that is the same as the aforementioned portion, repeated explanations will be omitted.

In this example, configuration is different from Example 3 in two points: one point is that the water-cooled radiator 18 connected to the tank 15 of the transformer's main body 8 by means of the upper pipe 10 and the lower pipe 11 is located outside the tower 3; and the other point is that the water-cooled radiator 18 is not equipped with an upper water pipe 12 and a lower water pipe 13 for circulating seawater.

The water-cooled radiator 18 is composed of a plurality of radiating panels (not illustrated) through which a cooling medium 16 flows. A large number of radiating panels are disposed vertically to the upper and lower pipes 10 and 11 in the direction of the axis of the pipes 10 and 11.

According to this example, the cooling medium 16 in the transformer's tank 15 raises its temperature as the result of taking heat generated in the iron core and the windings, which increases its volume and relatively decreases its density. The cooling medium 16 having low density and relatively light weight flows through the upper pipe 10 into the upper part of the water-cooled radiator 18 installed outside the tower 3. The cooling medium 16 that has flown into the radiator 18 is cooled via radiating panels by seawater 17 located outside the radiator 18 according to natural convection of seawater; and the heat is transferred to the seawater 17. As the result of heat having been taken by the seawater 17, the cooling medium 16 lowers its temperature and increases its density. Then, the cooling medium 16 flows downward in the radiators 18 and is returned to the transformer's tank 15 through the lower pipe 11.

Therefore, most of the heat generated in the transformer's main body 8 is directly transferred to the seawater 17 from the cooling medium 16 that flows through the water-cooled radiator 18; and the temperature of air inside the tower 3 of the offshore wind power generation system 1 that contains the transformer's main body 8 is almost the same as that of Example 3. Accordingly, it is possible to significantly reduce the size of the ventilation and air-conditioning equipment of the tower 3 or eliminate it altogether. Furthermore, when compared with Example 3, the upper water pipe and the lower water pipe are not necessary, which reduces the number of parts. Therefore, configuration becomes simple and overall costs can be reduced. Since a water pump is not provided, there is no possibility of a failure of a water pump causing a water-cooled radiator 18 to stop operating, and reliability can be increased as in Example 3.

### [Example 5]

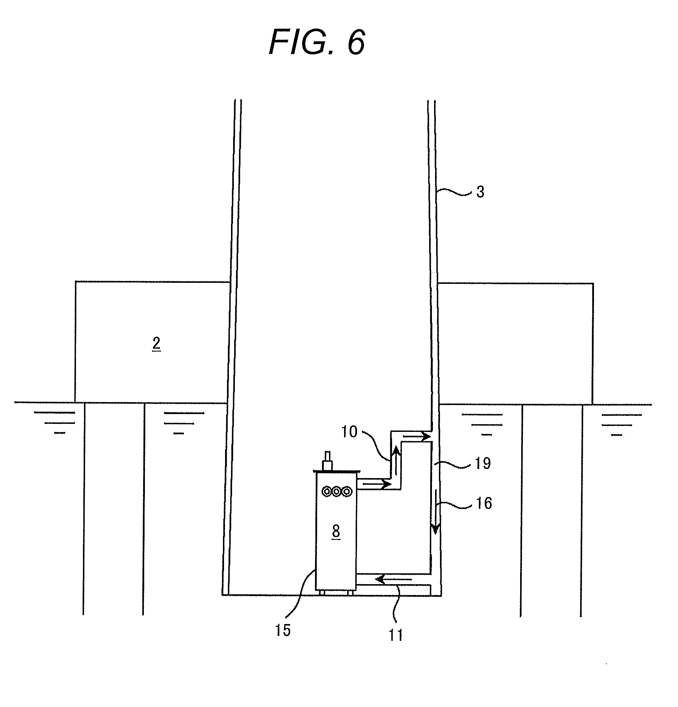

Example 5 will be described with reference to FIG. 6. However, with regard to a portion that is the same as the aforementioned portion, repeated explanations will be omitted.

In the transformer according to this example, the transformer's main body 8 is contained in the tower 3 of the wind power generation system 1, and a part of the outer wall of the tower 3 is configured as a double structure where a vertically conducting channel 19 is created. The channel 19 and the tank 15 of the transformer's main body 8 are connected by means of the upper pipe 10 and the lower pipe 11. Outside of the double-structure portion where the channel 19 has been created is covered with seawater.

According to the aforementioned configuration, the cooling medium 16 in the transformer's tank 15 raises its temperature as the result of taking heat generated in the iron core and the windings, which increases its volume relatively and decreases its density. The cooling medium 16 having low density and light weight ascends and flows through the upper pipe 10 into the upper part of the channel 19 located in the double-structure portion formed in the outer wall of the tower 3. Outside the channel 19 formed in the double structure, low-temperature seawater surrounds the tower 3, and the cooling medium 16 exchange heat with seawater via the outer wall of the tower 3. As the result of heat having been discharged into the sea, the cooling medium 16 lowers its temperature, reduces its volume, and increases its density; the cooling medium 16 then flows downward through the channel 19 in the double-structure portion and returns to the transformer's tank 15 through the lower pipe 11; thus, a flow is created.

Therefore, most of the heat generated in the transformer's main body 8 is directly transferred to the seawater from the cooling medium 16 that flows through the channel 19 in the double-structure portion via the outer wall of the tower 3. Thus, the temperature of air inside the tower 3 of the offshore wind power generation system 1 that contains the transformer's main body 8 does not increase much. Accordingly, it is possible to significantly reduce the size of the ventilation and air-conditioning equipment of the tower 3 or eliminate it altogether.

Moreover, since the outer wall of the tower 3 of the offshore wind power generation system 1 comes in contact with seawater having superior cooling characteristics, it is possible to obtain high cooling performance. Accordingly, it is possible to eliminate a water-cooled radiator for discharging heat generated in the transformer's main body 8 to seawater, which reduces the number of devices and simplifies the configuration, reducing the costs.

Furthermore, since a water pump is not provided, there is no possibility of a failure of a water pump which may stop discharging heat from a high-temperature cooling medium 16 to low-temperature seawater. Thus, reliability can be increased as in Examples 3 and 4.

In this example, description was given about the situation in which outside of the channel 19 formed in the double-structure portion is covered with seawater. However, it is obvious that as long as at least a part of the channel is covered with seawater, a certain level of effects can be obtained.

Moreover, in the above examples, description was given by taking a transformer installed in the tower of the offshore wind power generation system as an example. However, the wind power generation system can be a land wind power generation system located by the sea that can use seawater. In addition, if a wind power generation system is located in the environment surrounded by large-capacity of natural water, such as a lake, pond, or river, installation is possible by properly modifying the configuration, regardless of on water or on land.

Furthermore, in the aforementioned Examples 1 to 3, description was given about the situations where a water pump is used and the situations where a water pump is eliminated. However, even in the case where a water pump can be eliminated, by including a water pump, it is possible to further promote the convection flow. In the above examples, installers can select whether to give priority to simplified structure or increased cooling efficiency. In this aspect, those examples are already valuable.

As stated above, in the transformer according to the present invention, most of the heat from the transformer's main body is directly discharged to the surrounding environment such as seawater. Therefore, it is possible to significantly reduce the size of the ventilation and air-conditioning equipment that needs to be disposed in the conventional tower or eliminate it altogether. Furthermore, since temperature of a large-capacity water source such as seawater does not change, it is not necessary to provide a cooling tower for lowering the water temperature, which simplifies the configuration and reduces the costs. Thus, industrial applicability of the present invention is high.

Moreover, the present invention is not limited to the aforementioned examples and includes a variety of modifications. For example, the aforementioned examples have been described in detail for better understanding of the present invention, and the present invention is not limited to those provided with all of the described configurations. In addition, it is possible to replace a part of the configuration of a certain example with the configuration of another example, and it is also possible to add a configuration of another example to the configuration of a certain example. Furthermore, with regard to a part of the configuration of each example, addition of configuration of other examples, deletion, or replacement may be made.

## Claims

1. A transformer for wind power generation, having the main body (8) of the transformer (7) disposed in a tower (3) configuring a wind power generation system, the main body (8) of the transformer (7) comprising:
an iron core;
a winding mounted to the iron core;
a tank containing the iron core and the winding; and
an insulating refrigerant contained in the tank,
wherein
the main body (8) of the transformer (7) is configured such that the insulating refrigerant is cooled by water (17) surrounding the wind power generation system (1) as a secondary refrigerant.

2. The transformer for wind power generation according to Claim 1, further comprising
a heat exchanger (9) in which the insulating refrigerant and the secondary refrigerant exchange heat; and
tubes provided at the upper part and the lower part of the main body (8) of the transformer (7) to connect the main body (8) of the transformer (7) with the heat exchanger (9) respectively, wherein
the insulating refrigerant can move between the inside of the main body (8) of the transformer (7) and the inside of the heat exchanger (9) by passing through the tubes.

3. The transformer for wind power generation according to Claim 2, wherein
the heat exchanger (9) is disposed in the tower (3).

4. The transformer for wind power generation according to Claim 2 or 3, wherein
the heat exchanger (9) is configured by a part of a wall surface of the tower (3), and
at least a portion of the part of the wall surface of the tower (3) configuring the heat exchanger (9) is located under water.

5. The transformer for wind power generation according to at least one of Claims 1 to 4, wherein
the main body (8) of the transformer (7) is configured such that the secondary refrigerant passes through a pipe (10; 11) provided inside of the main body (8) of the transformer (7).

6. The transformer for wind power generation according to Claim 5, wherein
the pipe (10; 11) is spirally disposed along an inner wall of the main body (8) of the transformer (7).

7. The transformer for wind power generation according to Claim 5 or 6, further comprising a pump (14) for supplying the secondary refrigerant to the pipe (10; 11).

8. The transformer for wind power generation according to at least one of Claims 2 to 7, wherein
the heat exchanger (9) is configured such that the secondary refrigerant flows in from the lower part of the heat exchanger (9) and is discharged from the upper part of the heat exchanger (9).

9. The transformer for wind power generation according to Claim 9, further comprising a pump (14) for supplying the secondary refrigerant to the heat exchanger (9).

10. The transformer for wind power generation according to at least one of Claim 2 to 9, wherein
a part of the tower (3) is located under water, and
the main body (8) of the transformer (7) and the heat exchanger (9) are contained in a submerged portion of the tower (3).

11. The transformer for wind power generation according to Claim 2, wherein
the heat exchanger (9) is located under water.

12. A wind power generation system comprising:
the transformer (7) for wind power generation according to any one of Claims 1 to 11;
the tower (3);
a nacelle (4) provided on the upper part of the tower (3) so as to rotate within a surface vertical to the axis of the tower (3);
a power generator provided in the nacelle (4) to generate power by means of the rotation of a rotor, and electrically connected with the transformer (7) for wind power generation;
a gear connected to the power generator (6) via a spindle; and
a rotor blade (5) connected to the gear via the spindle.
